# EUROPEAN PATENT SPECIFICATION

(11) **EP 2 371 595 B1**
(45) Date of publication and mention of the grant of the patent: **27.11.2013**
(21) Application number: 11160924.4
(22) Date of filing: 01.04.2011
(51) Int. Cl.: B60J 5/06

(54) **System for suspending a tarpaulin**
System zum Aufhängen einer Abdeckplane
Système pour la suspension d'une bâche

(30) Priority: 02.04.2010 BE 201000211
(43) Date of publication of application: 05.10.2011
(73) Proprietor: Versus-Invest, 3660 Opglabbeek (BE)
(72) Inventor: Peeters, Pascal, 3990, Peer (BE); Rogiers, Erik, 3850, Kozen (BE)
(74) Representative: Van Reet, Joseph

(56) References cited:
- EP-A1- 0 882 614
- EP-A1- 1 029 728
- EP-A2- 1 714 814
- DE-U1-202009 002 438

## Description

The invention relates to a system for suspending a tarpaulin to close a side of a loading space, which suspension system comprises a carrier bar provided with at least one main rail and an auxiliary rail approximately parallel thereto, and which suspension system comprises trolleys designed to suspend said tarpaulin, which trolleys furthermore are each provided with at least one main wheel placed to roll over at least one track in said main rail in order to absorb at least one vertical force, said at least one rail being on the same side of the surface of the tarpaulin and at a distance there from when the tarpaulin is suspended on the trolleys, so that the suspended tarpaulin and the main wheel which absorbs a vertical force exert a torque on the trolleys, which trolleys are each fitted with at least one auxiliary wheel placed to roll over a further track in said auxiliary rail in order thus to absorb at least one horizontal transverse force.

Loading spaces closed by loading barriers, in particular mobile loading barriers located on trucks and/or trains, must comply with predetermined maximum external dimensions often imposed by law. Because of these maximum dimensions, the loading space effectively available within the loading platform is limited. Often sides of such loading areas are closed with a tarpaulin which can be pushed open to allow access to the loading space via the side concerned. To ensure maximum loading space, the tarpaulin is attached on the outermost periphery of the loading platform.

The tarpaulin is suspended on trolleys which can roll over tracks in rails mounted in a carrier bar. The trolleys carry the tarpaulin and are themselves carried by the carrier bar. The trolleys allow the tarpaulin to be pushed open by rolling the trolleys over the rails to one end of the carrier bar.

Because the tarpaulin is preferably attached at an outermost peripheral edge of the loading platform, the carrier bar is placed on an inside of the surface of the tarpaulin and at a distance there from. At least the carrier bar must not substantially overhang the outside of the tarpaulin, namely this would result in not the tarpaulin but the carrier bar being on the outermost edge of the loading platform. The trolleys are designed to roll over tracks in rails and are designed to suspend the tarpaulin. Because the weight of the tarpaulin is exerted on the trolleys at the level of the outermost peripheral edge, and the carrier bar carries the trolleys at a distance from this outermost peripheral edge, a moment force is exerted on the trolleys. Absorbing the moment force constitutes a problem for which various solutions have been considered.

EP0882614 describes a solution for this problem by the fitting of a lateral support to the rails in which two wheels run both at the top and the bottom of the wheels so that via the lateral support these two wheels can absorb not only the vertical force but also the moment force. The two wheels thus not only transfer the weight of the tarpaulin to the carrier bar but also prevent the rotation of the trolley by absorbing the moment force. It is found in practice that this loads the wheels very heavily so that they break. In particular because the height of the top lateral support is relatively low, due to the great moment force the top layer of the wheel, which in practice is often a rubber ring, is torn off.

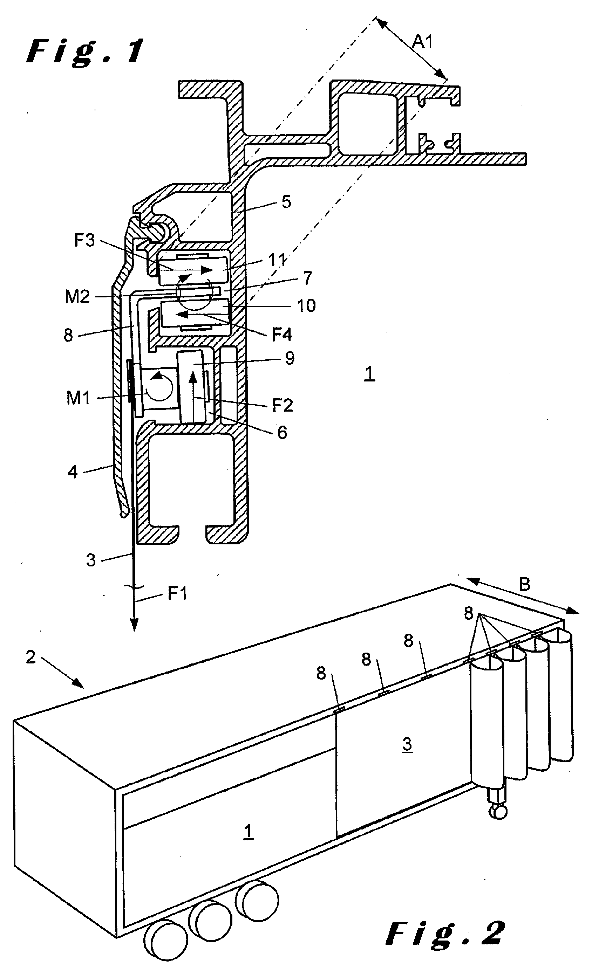

A further solution as shown in figure 1 is known on the market and is regarded as the closest prior art for the present invention. This prior art teaches that an auxiliary rail is provided above the main rail. In the main rail two main wheels run over a lying track to absorb a vertical force. In the auxiliary rail at least one third and one fourth wheel run over upright tracks on either side of the wheels in order thus to absorb a moment force. The main wheels and the main rail thus form a cooperating whole with which the vertical force can be absorbed. The third and fourth wheel and the auxiliary rail form a cooperating whole to establish the angular position of the trolley and absorb the moment force. Thus each wheel in the trolley need only absorb a force which is perpendicular to its axis of rotation, whereby the wheels do not break. In practice such a trolley furthermore has a fifth and sixth wheel which are placed behind the third and fourth wheels to roll in their respective tracks, in order to absorb a sufficiently large moment force. The disadvantage of this solution is that six wheels are required per trolley which makes this solution expensive and complex.

DE 20 2009 002 438 U describes in figure or the preamble of claim 1.

The aim of the invention is to provide a suspension system with which a tarpaulin can be suspended on the outermost peripheral edge of a loading platform in a reliable and cost efficient manner.

For this the invention has the feature that said main rail has a lateral support for said main wheel so that said torque can be absorbed between firstly said main wheel and secondly said auxiliary wheel. According to the invention the torque is not absorbed solely by the at least one auxiliary wheel as in the closest prior art. According to the invention the torque is also not absorbed solely by the main wheel as in EP0882614. The torque is absorbed firstly by the main wheel and secondly by the auxiliary wheel. As a result in relation to the prior art the distance over which the torque is absorbed can be substantially increased. The result is that an equally high torque can be absorbed with less force, namely moment equals force times distance to the pivot point. Tests show that the main wheel according to the invention can absorb the horizontal transverse force, which is lower than the horizontal transverse force applied to the wheels from EP0882614 when they are subjected to the same tensile force of the tarpaulin, without breaking, which is surprising. Furthermore for the present invention it is possible to produce a trolley with auxiliary wheel without a fourth wheel, which brings the minimum total number of wheels for a trolley according to the invention to three, which is cost effective.

Preferably said lateral support is designed to offer support to a running surface of said main wheel. This allows the lateral support to be designed simply as an upright edge adjacent to the track in the main wheel. Furthermore as a result the distance between the lateral support and said further track is at a maximum, whereby the moment force is absorbed over a maximum distance.

Preferably said at least one main wheel has two wheels which are intended to roll in said main rail each around its axis, whereby a mutual distance between these two axes is greater than the mean diameter of the two wheels. As a result tilting of the trolley about the axis of said at least one main wheel is prevented. Such a tilting would move the auxiliary wheel out of its preferred position above the at least one main wheel and as a result the trolley could be blocked in said carrier bar.

Preferably said two wheels are placed to roll over the same track. This allows simple assembly and construction of the trolley. Also the main wheel as a result can be designed simply, namely in this rail only one track must be provided. The two wheels can be aligned and stand next to each other on the same side of a frame of the trolley.

Preferably said main rail has two lateral supports between which at least one said main wheel can roll in order thus to absorb a horizontal transverse force in two directions. As a result not only said moment force can be absorbed which results from the weight of the tarpaulin when suspended on said trolley, but also an opposing moment force can be absorbed. This opposing moment force can occur on opening the tarpaulin when manually the tarpaulin is moved away from the loading space to be pulled to one side.

Preferably said auxiliary rail has two opposing tracks for said auxiliary wheel, each track on a different side of said auxiliary wheel, which two tracks have a mutual distance which is greater than the diameter of the auxiliary wheel. In particular in combination with the two lateral supports, not only can said moment force be absorbed but also the opposing moment force described above can be absorbed. Also in this way the angular position of the trolley around an axis perpendicular to the running direction of the trolley is clearly determined as the position in which the auxiliary wheel is positioned between the two tracks and the at least one main wheel runs over the track in the main rail.

Preferably said at least one main wheel has a plastic or rubber running surface. As a result on opening the tarpaulin any unevenness in the rail can be overcome without substantial resistance. Such wheels furthermore have a running surface which can absorb both a force perpendicular to the axis of the wheel and a lateral force which is parallel to the axis of the wheel. Such plastic or rubber wheels are furthermore less sensitive to dirt in the track. The track in the main rail is largely horizontal and lying, and preferably two lateral supports abut the sides of the track, whereby the accumulation of dirt in the track is not inconceivable, on the contrary.

Preferably said auxiliary wheel has a metal running surface. Wheels with a metal running surface are cheaper but cannot absorb a lateral force parallel to the axis of the wheel. Because the auxiliary wheel need not be designed to absorb such a lateral force, it is more cost efficient to make the auxiliary wheel out of metal. A wheel with a metal running surface is more sensitive to dirt than a wheel with a plastic or rubber surface. However because the auxiliary wheel rolls over an upright track, dirt will not constitute a substantial problem.

The invention will now be described below in more detail with reference to the embodiment example shown in the drawing.

The drawing shows:
- Figure 1: a trolley placed in a rail according to the prior art;
- Figure 2: a loading platform with a suspension system according to the invention;
- Figure 3: a suspension system according to the invention; and
- Figure 4: a trolley according to the invention.

In the drawing the same or similar elements have the same reference numeral.

Loading spaces 1 determined by loading platforms 2, in particular mobile loading platforms 2, are used to transport goods. Such a loading platform 2 is shown figure 2 as a loading platform 2 with a loading space 1 on a semi trailer for a truck. It will however be clear that the invention is applicable not only to truck semi trailers but also to train wagons, freight trucks with integral loading platform and further mobile loading platforms with loading spaces.

Such loading platforms have external dimensions which are limited by law. In Belgium for a non-refrigerated loading platform of a truck for example, for the external dimensions of such a loading platform a maximum width B of 2.55 metres is imposed by law. This imposed maximum external dimension furthermore affects the maximum available loading space 1 in the loading platform 2. To maximise this loading space 1, the wall 3 of the loading space 1 is preferably formed on the outermost peripheral edge of the loading platform 2. Carrying and support elements on which the loading platform 2 is constructed and which have a cross section greater than the thickness of the wall 3 of the loading space 1 are therefore preferably located inside this wall 3 so that none or only a small part of these elements protrude beyond the wall 3. In this way the external dimensions are largely defined by the wall 3 of the loading space 1 which maximises the space in the loading space 1.

The wall 3 is preferably formed by a tarpaulin 3. A tarpaulin 3 typically has a low thickness and therefore a tarpaulin 3 is suitable as a wall of a loading platform 2 for closing a loading space 1, taking up little of the loading space 1. Furthermore a tarpaulin 3 has the advantage that it is flexible and provided it is attached via a suitable suspension system it can be moved away to one side, as illustrated to the right of the trailer in figure 2, so that the loading space 1 is accessible.

Figure 1 shows a cross section of a suspension system known from the prior art. This suspension system allows the tarpaulin to be suspended at the point of the outermost peripheral edge of the loading platform forming the loading space. A screening element 4 is also attached at the point of the outermost peripheral edge and its function is to protect the suspension system of the tarpaulin from dirt etc. On the inside in relation to the tarpaulin is the carrier bar 5 with the main rail 6 and auxiliary rail 7 and the trolleys 8, which together form the suspension system for the tarpaulin 3. Each of the trolleys 8 comprises two main wheels 9 with a largely horizontal axis and a third wheel 10 and a fourth wheel 11 with a largely vertical axis. The tarpaulin by its weight exerts a downward force on the trolley at the level of the peripheral part of the loading platform, indicated by F1. This downward force F1 is absorbed by the trolley, more specifically by the main wheels which roll in the main rail, by an upward force F2 which is equal to the downward force F1. Because the upward force F2 and the downward force F1 do not lie in the extension of each other, a moment force is exerted on the trolley as indicated by M1.

The third wheel 10 and fourth wheel 11 together with the auxiliary rail 7 form a working whole to absorb said moment force M1 so as to counter a rotation of the trolley 8. Here the third wheel 10 rolls against a track on the right-hand side of the auxiliary rail 7 and presses against this track with a largely horizontal force F4. The fourth wheel 11 rolls against a track on the right-hand side of the auxiliary rail 7 and presses against this track with a largely horizontal force F3. Because the forces F3 and F4 do not lie in the extension of each other, a further moment force M2 is exerted on the trolley. This further moment force M2 is largely equal to the moment force M1, whereby rotation of the trolley 8 is prevented. To obtain the moment force M2 which counters the moment force M1, in practice not only a third and a fourth wheel but also a fifth and a sixth wheel are required which run in the respective tracks of the third and fourth wheels. This makes the suspension system in this embodiment expensive and complex.

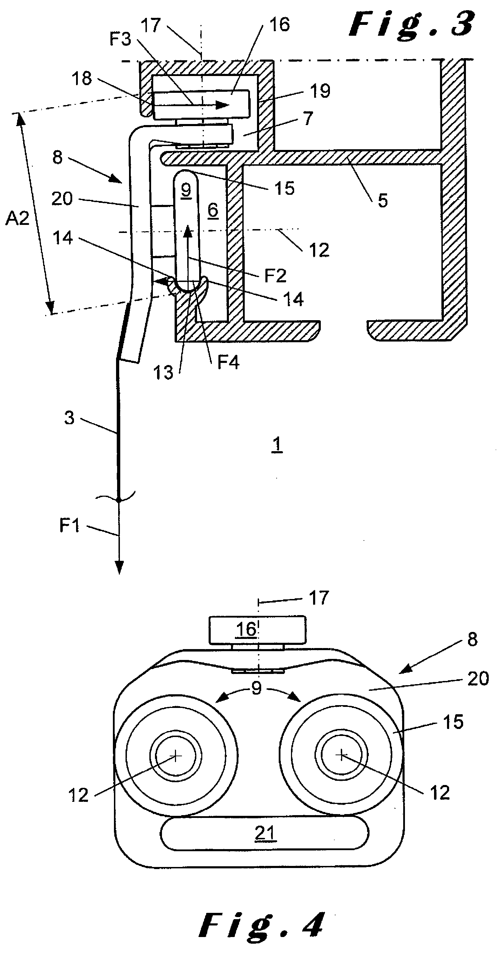

Figure 3 shows a suspension system according to the present invention. This suspension system has a tarpaulin 3 which is suspended on an outermost peripheral side of a loading platform 2 to close the loading space 1. The tarpaulin 3 is suspended on trolleys 8 which roll on rails in a carrier bar 5. The carrier bar 5 is shown in cross section in figure 3. This carrier bar 5 extends preferably over the complete length of the loading platform 2 so that the trolleys 8 can be rolled over the complete length.

The tarpaulin 3 is preferably intended to screen the loading space 1 from weather such as wind and rain and to protect this against unauthorised viewing and/or access. Goods in the loading space 1 can thus be protected optimally. For this the tarpaulin 3 is preferably non-transparent, more preferably it is opaque. Furthermore the tarpaulin 3 preferably comprises fixing means for fixing the suspended tarpaulin 3 to the loading platform at the bottom and side edges of the tarpaulin 3.

The tarpaulin 3 is suspended via a set of trolleys on the carrier bar. Here the trolleys are intended to roll in rails which lie in the carrier bar. The rails have a main rail 6 and an auxiliary rail 7, the auxiliary rail 7 extending largely parallel to the main rail 6. Preferably the auxiliary rail 7 is above the main rail 6. As a result it will be simple to make the distance between the tracks in the main rail and the tracks in the auxiliary rail relatively large, which is an advantage as described in more detail below. However embodiments wherein the auxiliary rail 7 extends below the main rail can also be produced according to the invention. The rails contain tracks which can be defined as the part of the rails which is intended to come into direct contact with the wheels of the trolleys 8 when they roll over the rails.

Figures 3 and 4 show a trolley according to the invention. Such a trolley has at least one, preferably two main wheels 9. These main wheels 9 are intended to roll in the main rail 6 and thus absorb the vertical force caused by the weight of the tarpaulin. For this the main wheels 9 have an axis 12 which extends largely horizontally, whereby the wheels 12 roll largely upright. Preferably the two main wheels 9 are placed in the extension of each other and spaced apart so that these wheels roll in the same track 13 in the main rail 6. Each main wheel 9 is intended to rotate around an axis 12 and the distance between the axes 12 of the two wheels 9 is greater than the mean diameter of the two main wheels 9. Thus these wheels 9 can lie in the extension of each other without touching and thereby preventing each other from rotating.

The main rail 6, adjacent to the track 13 on which the two main wheels 9 roll, preferably comprises a lateral support 14 on both sides of the track 13. The lateral support 14 is preferably formed as an upright edge which extends from one edge of the track 13 in the main rail 6. The upright edge thus forms a largely upright surface at the side of and facing towards the largely horizontal track 13. The two main wheels 9 are intended for lateral support against this upright edge. Thus the main wheels are intended primarily to roll over a largely horizontal track 13 whereby a vertical force can be absorbed, and secondly to be supported laterally against the upright edge 14. Preferably the largely horizontal track 13 and the upright edges 14 are formed as a bowl which largely corresponds to the form of the running surface 15 of the two main wheels 9. The main wheels 9 and the main rail 8 with this thus form a cooperating whole in order both to absorb a vertical force and to prevent the wheels from shifting substantially laterally in the main rail 6.

The trolley according to the invention furthermore comprises an auxiliary wheel 16 which is also placed in the running direction of the trolley 8 and largely perpendicular in relation to the two main wheels 9. The axis 17 around which the running wheel rotates extends largely vertical to this. Thus the auxiliary wheel 16 is positioned to absorb a largely horizontal force which lies transverse to the direction of running of the trolley 8. The auxiliary wheel 16 is intended to roll in the auxiliary rail 7. The auxiliary rail 7 extends largely horizontally in the running direction of the trolley 8. The auxiliary rail 7 is preferably placed above the main rail 6. The auxiliary rail 7 comprises a further track 18, preferably two further tracks 18 and 19, on which the auxiliary wheel 16 can roll, preferably each track lies on one side of the auxiliary wheel 16. The further tracks 18 and 19 are formed upright in the auxiliary rail 7 so that the auxiliary wheel 16 can exert a horizontally directed force against each of these upright tracks 18 and 19. In this way the auxiliary wheel 16 and the auxiliary rail 7 form a cooperating whole which is designed to prevent a horizontal shift of the trolley 8 transverse to the running direction because a force in this direction can be absorbed by the auxiliary wheel 16.

The specific structure of the trolley wherein two main wheels 9 are provided which are aligned and wherein furthermore an auxiliary wheel 16 is provided perpendicular to and above the main wheels 9, allows simple production of a trolley. The main wheels 9 and the auxiliary wheel 16 are attached to a frame 20. The frame 20 is preferably formed from a piece of plate material which is folded into an L-shape. On the short leg of the L-shape is attached the auxiliary wheel 16, preferably at the end of the short leg. The two main wheels 9 are attached next to each other to the long leg of the L-shape, preferably at the centre of the long leg. On the end of the long leg are provided means to suspend the tarpaulin. Preferably these means are formed by a slot 21 which extends in an end part of this longitudinal leg. Preferably the slot 21 extends largely horizontally. The auxiliary wheel 16 is preferably attached on the outer curved side of the L-shape. The two auxiliary wheels 9 are preferably attached on the inner curved side of the L-shape.

Production of a frame 20 from plate material, where the plate material is simply cut out and folded, is simple and hence cost efficient. The simple structure of the trolley 8 will therefore be an advantage for production of the trolley 8. Preferably the long leg of the L-shape below the two main wheels 9 is folded towards the outer curved side. This has the result that the canvas can be suspended on the outermost peripheral edge of the loading platform, which is advantageous as described above in detail.

In the trolley 8 according to the invention the downward force 1 exerted by the suspended tarpaulin and the upward force 2 exerted by the main wheels 9 do not lie in the extension of each other. As a result the trolley 8 according to the invention is also subject to a moment force M1 which is similar to the moment force M1 given in figure 1. This moment force M1 is absorbed by a countering moment force M2 which is also similar to the moment force M2 shown in figure 1. The countering moment force M2 results from the forces F3 and F4. Forces F3 and F4 are largely equal (in the drawing the length of the force indication is not proportional to the size of the force, to simplify the drawing). Force F3 occurs in the trolley 8 according to the invention because the auxiliary wheel 16 runs against and presses against the further track in the auxiliary rail 7. Force F4 occurs in the trolley 8 according to the invention because the main wheels 9 press with their running surface against the lateral support 14.

In figure 1 which shows the prior art, the distance A1 between the contact points of force F3 and force F4 is relatively small, in particular smaller than distance A2 in figure 3. This distance A1 is a factor, together with the sizes of F3 and F4, for determining the size of the moment force M2. Because this distance A1 is relatively small, F3 and F4 must be relatively large to generate a predetermined moment force M2. Figure 3 shows the trolley 8 according to the invention, with forces F3 and F4 and the distance A2 in between. This distance A2 is relatively large, in particular larger than the distance A1 from figure 1, whereby F3 and F4 can be relatively small in order to generate the predetermined moment M2. Because these forces are smaller, it appears in practice that the two main wheels can tolerate this force laterally without breaking. As the two main wheels are namely intended to absorb a force perpendicular to their axial direction, it can be considered as an unexpected effect that the two wheels can also absorb a lateral force with their running surface without breaking. As a result the invention provides a trolley which is simple to produce and durable, to suspend a tarpaulin on a peripheral edge of a loading platform.

## Claims

1. System for suspending a tarpaulin (3) to close a side of a loading space (1), which suspension system comprises a carrier bar (5) fitted with at least one main rail (6) and an auxiliary rail (7) substantially parallel to said main rail (6), which suspension system also comprises trolleys (8) designed to suspend said tarpaulin (3), which trolleys (8) are each provided with at least one main wheel (9) arranged to roll over at least one track (13) in said main rail (6) in such a manner as to absorb at least a vertical force (F2), said at least one track (13) being located on one same side of the surface of the tarpaulin (3), at a distance there from, when the tarpaulin (3) is suspended on the trolleys (8), so that this suspended tarpaulin (3) and the main wheel (9) which absorbs a vertical force (F2) exert a torque (M1) on the trolleys (8), which trolleys (8) are each fitted with at least one auxiliary wheel (16) placed to roll over a further track (18) in said auxiliary rail (7) in order thus to absorb at least one horizontal transverse force (F3), where said main rail (6) comprises a lateral support (14) for said main wheel (9) such that said torque (M1) can be absorbed between firstly said main wheel (9) and secondly said auxiliary wheel (16), **characterised in that** said auxiliary rail (7) is located above said main rail (6).

2. Suspension system for a tarpaulin (3) according to claim 1, wherein said lateral support (14) is provided to offer support to a running surface (15) of said main wheel (9).

3. Suspension system for a tarpaulin (3) according to claim 1 or 2, wherein the trolleys (8) comprise two main wheels (9) which are provided to roll in said main rail (6) each around their axis (12), these two axes (12) having a mutual distance which is greater than the average diameter of the two main wheels (9).

4. Suspension system for a tarpaulin (3) according to claim 3, wherein said two wheels (9) are placed to roll approximately over the same track (13).

5. Suspension system for a tarpaulin (3) according to any of the preceding claims, wherein said main rail (6) comprises two lateral supports (14) between which said at least one main wheel (9) can roll in order to absorb a horizontal transverse force in two directions.

6. Suspension system for a tarpaulin (3) according to any of the preceding claims, wherein said auxiliary rail (7) has two opposing tracks (18, 19) for said auxiliary wheel (16), each track (18, 19) on a different side of said auxiliary wheel (16), which two tracks (18, 19) have a mutual distance which is greater than the diameter of the auxiliary wheel (16).

7. Suspension system for a tarpaulin (3) according to any of the preceding claims, wherein said tarpaulin (3) can be fixed to the trolleys (8) below said main wheel (9).

8. Suspension system for a tarpaulin (3) according to any of the preceding claims, wherein said suspension system is designed to support a tarpaulin (3) to close a side of a loading space (1) formed by a loading platform (2) at an outermost peripheral edge of said loading platform (2).

9. Suspension system for a tarpaulin (3) according to any of the preceding claims, wherein said main wheel (9) has a plastic or rubber running surface (15).

10. Suspension system for a tarpaulin (3) according to any of the preceding claims, wherein said auxiliary wheel (16) has a metal running surface.

## Patentansprüche

1. System zum Aufhängen einer Abdeckplane (3) zum Verschließen einer Seite eines Laderaums (1), wobei das Aufhängesystem einen Träger (5) umfasst, der mit zumindest einer Hauptschiene (6) und einer Hilfsschiene (7) ausgestattet ist, welche zur erwähnten Hauptschiene (6) im Wesentlichen parallel ist, wobei das Aufhängesystem auch Laufkatzen (8) umfasst, entworfen, um die erwähnte Abdeckplane (3) aufzuhängen, wobei die Laufkatzen (8) jeweils mit zumindest einem Hauptrad (9) versehen sind, angeordnet, um über zumindest eine Spur (13) in der erwähnten Hauptschiene (6) zu rollen, sodass zumindest eine vertikale Kraft (F2) absorbiert wird, wobei sich die erwähnte zumindest eine Spur (13) auf einer gleichen Seite der Oberfläche der Abdeckplane (3) befindet, in einem Abstand davon, wenn die Abdeckplane (3) an den Laufkatzen (8) hängt, sodass diese angehängte Abdeckplane (3) und das Hauptrad (9), das eine vertikale Kraft (F2) absorbiert, ein Drehmoment (M1) auf die Laufkatzen (8) ausüben, wobei die Laufkatzen (8) jeweils mit zumindest einem Hilfsrad (16) ausgestattet sind, platziert, um über eine weitere Spur (18) in der erwähnten Hilfsschiene (7) zu rollen, um zumindest eine horizontale Querkraft (F3) zu absorbieren, wobei die erwähnte Hauptschiene (6) eine seitliche Stütze (14) für das erwähnte Hauptrad (9) umfasst, sodass das erwähnte Drehmoment (M1) zwischen erstens dem erwähnten Hauptrad (9) und zweitens dem erwähnten Hilfsrad (16) absorbiert werden kann, **dadurch gekennzeichnet, dass** sich die erwähnte Hilfsschiene (7) über der erwähnten Hauptschiene (6) befindet.

2. System zum Aufhängen einer Abdeckplane (3) nach Anspruch 1, wobei die erwähnte seitliche Stütze (14) vorgesehen ist, um einer Lauffläche (15) des erwähnten Hauptrades (9) Unterstützung zu bieten.

3. System zum Aufhängen einer Abdeckplane (3) nach Anspruch 1 oder 2, wobei die Laufkatzen (8) zwei Haupträder (9) umfassen, die vorgesehen sind, um in der erwähnten Hauptschiene (6) jeweils um ihre Achse (12) zu rollen, wobei diese beiden Achsen (12) einen Abstand voneinander haben, der größer ist, als der durchschnittliche Durchmesser der zwei Haupträder (9).

4. System zum Aufhängen einer Abdeckplane (3) nach Anspruch 3, wobei die erwähnten zwei Räder (9) platziert sind, um annähernd über dieselbe Spur (13) zu rollen.

5. System zum Aufhängen einer Abdeckplane (3) nach irgendeinem der vorangegangenen Ansprüche, wobei die erwähnte Hauptschiene (6) zwei seitliche Stützen (14) umfasst, zwischen denen das erwähnte zumindest eine Hauptrad (9) rollen kann, um eine horizontale Querkraft in zwei Richtungen zu absorbieren.

6. System zum Aufhängen einer Abdeckplane (3) nach irgendeinem der vorangegangenen Ansprüche, wobei die erwähnte Hilfsschiene (7) zwei gegenüberliegende Spuren (18, 19) für das erwähnte Hilfsrad (16) hat, jede Spur (18, 19) auf einer anderen Seite des erwähnten Hilfsrades (16), wobei die zwei Spuren (18, 19) einen Abstand voneinander haben, der größer ist, als der Durchmesser des Hilfsrades (16).

7. System zum Aufhängen einer Abdeckplane (3) nach irgendeinem der vorangegangenen Ansprüche, wobei die erwähnte Abdeckplane (3) an den Laufkatzen (8) unter dem erwähnten Hauptrad (9) befestigt werden kann.

8. System zum Aufhängen einer Abdeckplane (3) nach irgendeinem der vorangegangenen Ansprüche, wobei das erwähnte Aufhängesystem konzipiert ist, um eine Abdeckplane (3) zu tragen, um eine Seite eines Laderaums (1) zu verschließen, welche durch eine Ladeplattform (2) an einem äußersten umgebenden Rand der erwähnten Ladeplattform (2) gebildet ist.

9. System zum Aufhängen einer Abdeckplane (3) nach irgendeinem der vorangegangenen Ansprüche, wobei das erwähnte Hauptrad (9) eine Lauffläche (15) aus Kunststoff oder Gummi hat.

10. System zum Aufhängen einer Abdeckplane (3) nach irgendeinem der vorangegangenen Ansprüche, wobei das erwähnte Hilfsrad (16) eine Lauffläche aus Metall hat.

## Revendications

1. Système pour suspendre une bâche (3) pour fermer un côté d'un espace de chargement (1), lequel système de suspension comprend une barre porteuse (5) équipée d'au moins un rail principal (6) et d'un rail auxiliaire (7) sensiblement parallèle audit rail principal (6), lequel système de suspension comprend également des chariots (8) conçus pour suspendre ladite bâche (3), lesquels chariots (8) sont pourvus chacun d'au moins une roue principale (9) agencée pour rouler sur au moins un chemin de roulement (13) dans ledit rail principal (6) de manière à absorber au moins une force verticale (F2), ledit au moins un chemin de roulement (13) étant situé sur un même côté de la surface de la bâche (3), à une distance de celle-ci, quand la bâche (3) est suspendue sur les chariots (8) de sorte que cette bâche (3) suspendue et la roue principale (9) qui absorbe une force verticale (F2) exercent un couple (M1) sur les chariots (8), lesquels chariots (8) sont équipés chacun d'au moins une roue auxiliaire (16) placée pour rouler sur un autre chemin de roulement (18) dans ledit rail auxiliaire (7) afin d'absorber ainsi au moins une force transversale horizontale (F3), ledit rail principal (6) comprenant un support latéral (14) pour ladite roue principale (9) de manière que ledit couple (M1) puisse être absorbé entre premièrement ladite roue principale (9) et deuxièmement ladite roue auxiliaire (16), **caractérisé en ce que** ledit rail auxiliaire (7) est situé au-dessus dudit rail principal (6).

2. Système de suspension pour une bâche (3) selon la revendication 1, dans lequel ledit support latéral (14) est prévu pour offrir un support à une surface de roulement (15) de ladite roue principale (9).

3. Système de suspension pour une bâche (3) selon la revendication 1 ou 2, dans lequel les chariots (8) comprennent deux roues principales (9) qui sont prévues pour rouler dans ledit rail principal (6), chacune autour de son axe (12), ces deux axes (12) ayant une distance mutuelle qui est supérieure au diamètre moyen des deux roues principales (9).

4. Système de suspension pour une bâche (3) selon la revendication 3, dans lequel lesdites deux roues (9) sont placées pour rouler approximativement sur le même chemin de roulement (13).

5. Système de suspension pour une bâche (3) selon l'une quelconque des revendications précédentes, dans lequel ledit rail principal (6) comprend deux supports latéraux (14) entre lesquels ladite au moins une roue principale (9) peut rouler afin d'absorber une force transversale horizontale dans deux directions.

6. Système de suspension pour une bâche (3) selon l'une quelconque des revendications précédentes, dans lequel ledit rail auxiliaire (7) a deux chemins de roulement opposée (18, 19) pour ladite roue auxiliaire (16), chaque chemin de roulement (18, 19) sur un côté différent de ladite roue auxiliaire (16), lesquels deux chemins de roulement (18, 19) ont une distance mutuelle qui est supérieure au diamètre de la roue auxiliaire (16).

7. Système de suspension pour une bâche (3) selon l'une quelconque des revendications précédentes, dans lequel ladite bâche (3) peut être fixée aux chariots (8) en dessous de ladite roue principale (9).

8. Système de suspension pour une bâche (3) selon l'une quelconque des revendications précédentes, dans lequel ledit système de suspension est conçu pour supporter une bâche (3) pour fermer un espace de chargement (1) formé par une plate-forme de chargement (2) à un bord périphérique le plus externe de ladite plate-forme de chargement (2).

9. Système de suspension pour une bâche (3) selon l'une quelconque des revendications précédentes, dans lequel ladite roue principale (9) a une surface de roulement (15) en plastique ou en caoutchouc.

10. Système de suspension pour une bâche (3) selon l'une quelconque des revendications précédentes, dans lequel ladite roue auxiliaire (16) a une surface de roulement en métal.
